(19) Europäisches Patentamt
European Patent Office
Office européen des brevets

(11) **EP 3 670 306 B1**

(12) **EUROPEAN PATENT SPECIFICATION**

(45) Date of publication and mention
of the grant of the patent:
**05.04.2023 Bulletin 2023/14**

(21) Application number: **17921781.5**

(22) Date of filing: **14.08.2017**

(51) International Patent Classification (IPC):
**B62D 35/00** (2006.01)    **B62D 29/00** (2006.01)
**C09D 5/33** (2006.01)    **C09K 11/00** (2006.01)
**H01L 31/055** (2006.01)

(52) Cooperative Patent Classification (CPC):
**B62D 35/00; B62D 29/00; C09D 5/004;** Y02E 10/52

(86) International application number:
**PCT/JP2017/029281**

(87) International publication number:
**WO 2019/035156 (21.02.2019 Gazette 2019/08)**

(54) **MOBILE BODY HAVING REFLECTION CONTROL LAYER**

**MOBILER KÖRPER MIT REFLEXIONSKONTROLLSCHICHT**

**CORPS MOBILE COMPORTANT UNE COUCHE DE CONTRÔLE DE RÉFLEXION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2020 Bulletin 2020/26**

(73) Proprietor: **Nissan Motor Co., Ltd.
Yokohama-shi, Kanagawa 221-0023 (JP)**

(72) Inventor: **SATO Yuichi
Atsugi-shi
Kanagawa 243-0123 (JP)**

(74) Representative: **Hoefer & Partner Patentanwälte
mbB
Pilgersheimer Straße 20
81543 München (DE)**

(56) References cited:
**JP-A- S5 826 622     JP-A- 2008 037 403
JP-A- 2008 037 403     US-A- 6 049 419
US-B2- 9 588 268**

**Description**

TECHNICAL FIELD

The present invention relates to a mobile body having a reflection control layer formed on a surface thereof.

BACKGROUND ART

Conventionally, in order to prevent the temperature increase in a vehicle interior due to solar heat, it has been known to set a reflectance on a surface of an automobile with respect to light in a wavelength region from 350 nanometers to 2100 nanometers to be equal to or larger than 20% to 60% by adjusting a particle diameter of paint to be painted on the surface of the automobile (see Patent Literature 1).
Patent Literature 2 teaches an optical film. To lessen cooling load with solar rays reflected in an effective manner, the thickness of each layer of the optical film is set to a proper range according to inclination of the surface of a window glass. When the optical film thickness of each layer of rays reflecting film is oversize, a spectral character moves to the side of longer wavelength, thereby a reflecting region enters the visible long wavelength region whereby transmitting light is rather seen reddish but, in contrast, if it is too thin, the spectral character moves to the side of shorter wavelength and the transmitting light is seen somewhat tinged bluish in consequence. Therefore, in order to meet these requirements, an incidence angle of light comes to theta and when the minimum and maximum optical film thickness (refractive index X thickness) of a high refractive index layer and a low refractive index layer are t1, t2 and 12 respectively (in case of not including the visible region light in the reflecting region of the rays reflecting film at that time), the optical film thickness of each layer is set down to a range of above t1 and below t2.
Patent Literature 3 teaches an infrared shielding film, which includes a laminated body including a high refractive index layer and a low refractive index layer, the high refractive index layer and the low refractive index layer being alternately laminated and including a high refractive index material and a low refractive index material, respectively, and the high refractive index material and the low refractive index material having mutually different refractive indexes. The infrared film also includes a primary reflection unit providing a primary reflection band with reflectivity exceeding 60% in near-infrared region in reflection spectra of the infrared shielding film for incident light angles of 0° and 60°. In a short-wavelength side of the primary reflection band, wavelengths exhibiting 70% reflectivity of the peak value in the primary reflection band are referred to as s(0) nm and s(60) nm, respectively, a relationship s(60) nm>700 nm is satisfied.

CITATION LIST

PATENT LITERATURE

Patent Literature 1: Patent Publication No. 3230838

Patent Literature 2: JP S58 26622 A

Patent Literature 3: US 9 588 268 B2

SUMMARY OF INVENTION

TECHNICAL PROBLEM

Meanwhile, the inventors of the present invention have found that it is effective to increase the temperature of air in a region (a mainstream) outside a region where an air flow rate near a mobile body decreases (a boundary layer), in order to reduce the air resistance of the mobile body.
However, according to the method described in Patent Literature 1, paint highly reflects light in a wavelength in a visible light region (380 nanometers to 750 nanometers). Therefore, there is a problem that pedestrians are dazzled by an automobile applied with the paint.
Further, even if paint is applied to an automobile to reduce the reflectance with respect to the light in the visible light region in order to avoid the above problem, since the major part of spectra of the sunlight is in the visible light region, the temperature increase on the surface of the automobile, particularly, on a top panel of the automobile is caused by the incident sunlight. Since a viscosity coefficient of air in the boundary layer present on the surface of the top panel of the automobile increases with the temperature increase, there is a problem that the viscous friction resistance received from the air in the boundary layer increases, which is more dominant than the pressure resistance in the top panel of the automobile.

The present invention has been made in view of such problems, and an object of the present invention is to reduce the air resistance of a mobile body by increasing the temperature of air in a mainstream around the mobile body.

SOLUTION TO PROBLEM

The present invention is defined in the appended claims. In a mobile body according to the present invention, a reflection control layer is formed on a surface thereof. When a surface that receives traveling wind from a traveling direction of the mobile body, of the surface of the mobile body, is designated as a mobile body front surface and a surface substantially parallel to the traveling direction is designated as a mobile body top surface, an average reflectance in a wavelength from 0.75 micrometer to 100 micrometers of the reflection control layer on the mobile body front surface is different from an average reflectance in a wavelength from 0.3 micrometer to 100 micrometers of the reflection control layer on the mobile body top surface, wherein an average reflectance of the reflection control layer on the mobile body front surface in a wavelength from 0.75 micrometer to 100 micrometers is equal to or higher than 4%.

ADVANTAGEOUS EFFECTS OF INVENTION

According to the present invention, air in a mainstream is heated by light reflected on a surface of a mobile body to reduce the density of heated air, thereby reducing the air resistance with respect to the mobile body, while preventing that pedestrians are dazzled by the mobile body.

BRIEF DESCRIPTION OF DRAWINGS

[Fig. 1] Fig. 1 is a schematic diagram of an air flow generated around an automobile according to the present embodiment.

[Fig. 2] Fig. 2 is a partial sectional view along a traveling direction of the automobile near a surface of the automobile according to the present embodiment.

[Fig. 3] Fig. 3 is an enlarged sectional view illustrating a surface structure of the automobile according to the present embodiment.

[Fig. 4] Fig. 4 is a graph illustrating a verification result of the temperature increase of a mainstream by reflected light.

[Fig. 5A] Fig. 5A is a front view when the automobile according to the present embodiment is viewed from the front with respect to a traveling direction.

[Fig. 5B] Fig. 5B is a top view when the automobile according to the present embodiment is viewed from above with respect to the traveling direction.

[Fig. 5C] Fig. 5C is a side view when the automobile according to the present embodiment is viewed from the side with respect to the traveling direction.

DESCRIPTION OF EMBODIMENTS

Embodiments of the present invention will be described below with reference to the drawings. In the descriptions of the drawings, like parts are denoted by like reference signs and redundant explanations thereof will be omitted. In the following descriptions, a case where a mobile body is an automobile is described as an example.

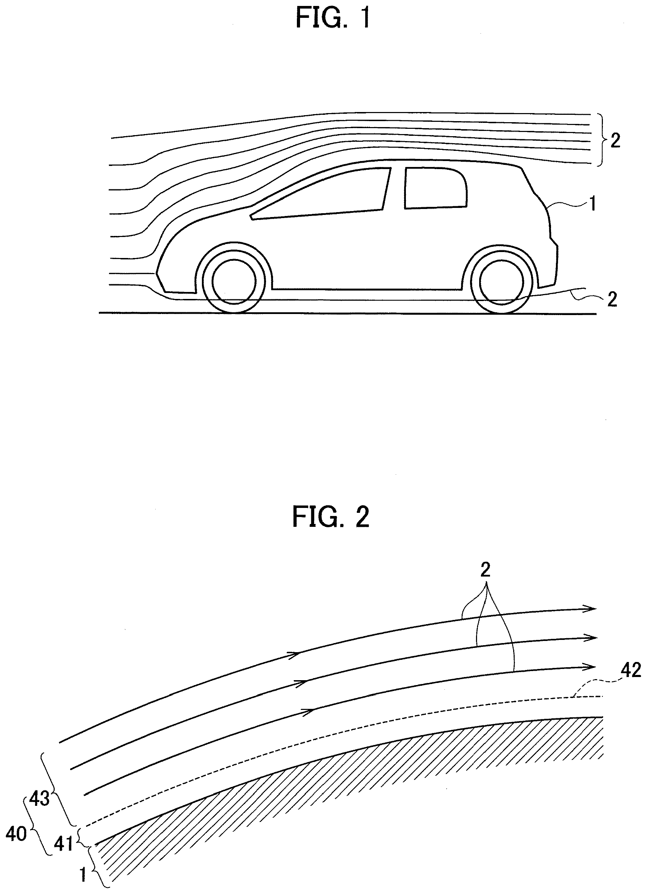

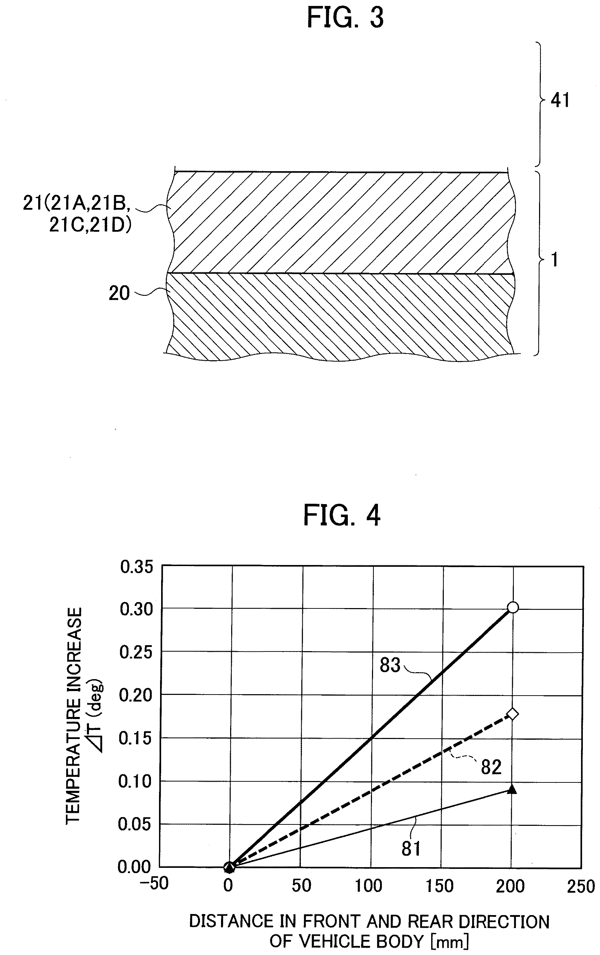

Fig. 1 is a schematic diagram of an air flow generated during travel of an automobile according to the present embodiment. Fig. 2 is an enlarged sectional view along a traveling direction of the automobile near the surface of the automobile according to the present embodiment. Fig. 3 is an enlarged sectional view illustrating a surface structure of the automobile according to the present embodiment.

As illustrated in Fig. 3, a vehicle-body paint layer 20 is formed on the surface of an automobile 1, and a reflection control layer 21 is further formed on the vehicle-body paint layer 20.

The reflection control layer 21 reflects light in a wavelength region of sunlight (0.3 micrometer to 100 micrometers). The type and thickness of the reflection control layer 21 can be changed according to the position on the surface of the automobile.

The wavelength region of the sunlight consists of a wavelength region of near-ultraviolet radiation (0.3 micrometer to 0.38 micrometer), a visible light region (0.38 micrometer to 0.75 micrometer), and a wavelength region of infrared radiation (0.75 micrometer to 100 micrometers). Further, the wavelength region of the infrared radiation includes a wavelength region of near infrared rays (0.75 micrometer to 3 micrometers), and a wavelength region of middle-infrared and far-infrared rays (3 micrometers to 100 micrometers).

A wavelength region from 0.75 micrometer to 0.78 micrometer, of the wavelength region of the near infrared rays, is a heat absorption band (an oxygen A-band) of oxygen molecules in the air.

<Air flow around automobile during travel>

As illustrated in Fig. 1, when it is viewed in a static system of the automobile 1, an air flow along the surface of the automobile 1 is generated around the automobile 1 during travel. As illustrated in Fig. 2, the air flow becomes slow due to viscous friction generated between the air and the surface of the automobile near the surface of the automobile 1, to form a boundary layer 41. In the boundary layer 41, as moving away from the surface of the automobile 1, the velocity of air increases, and the velocity of air approaches the relative velocity of the automobile with respect to the air.

In an outside region 43 outside a boundary 42 being away from the surface of the automobile 1, there is no influence of the viscous friction generated between the air and the surface of the automobile, and the velocity of air becomes substantially equal to the relative velocity of the automobile with respect to the air. The air flow in the outside region 43 is referred to as "mainstream 2".

<Mechanism for reducing air resistance>

Next, a mechanism for reducing the air resistance of the automobile 1 by providing the reflection control layer 21 that reflects light in a predetermined wavelength region to the automobile 1 is described.

In general, the force received from the air by the automobile 1 during travel is represented by the force in each axial direction of the front and rear, right and left, and up and down directions of the automobile 1 and a moment around each axis, and is collectively referred to as "six components of aerodynamic force". Normally, the force received from the air by the automobile 1 during travel is represented non-dimensionally. Particularly, an air resistance F being the force in the front and rear direction is represented by an air resistance coefficient $C_d$ represented by the following formula 1. Here, $\rho$ is a density of the air in the outside region 43, A is a frontal projected area with respect to the traveling direction of the automobile 1, and V is a relative velocity of the automobile 1 with respect to the mainstream.

[Formula 1]

$$C_d = \frac{2F}{\rho V^2 A}$$

The air resistance coefficient $C_d$ is a value obtained by dividing the air resistance F by a product of a dynamic pressure of air "$\rho V^2/2$" and the frontal projected area A. The air resistance coefficient $C_d$ is an amount determined depending on the shape of the automobile 1, and affects the fuel consumption at the time of travel, the maximum velocity, the acceleration performance, and the like. In the air resistance F of an object such as the automobile 1, pressure resistance is dominant when it is considered in the automobile 1 as a whole, and friction resistance, which becomes a problem in an aircraft, is small in the automobile 1. Therefore, in order to reduce the air resistance F in the automobile 1, it is effective to focus on a reduction of the pressure resistance.

When reviewing the formula 1 based on the above focusing, in the design of a normal automobile, the frontal projected area A is regarded as an available parameter in the design of a vehicle in order to reduce the pressure resistance. Meanwhile, the air density $\rho$ of the mainstream and the velocity V can vary according to the travel environment of the automobile, and thus the air density $\rho$ and the velocity V are not regarded as an available parameter in the design of a vehicle.

However, the inventors of the present invention consider that the air density $\rho$ of the mainstream can be an available parameter in the design of a vehicle in order to reduce the pressure resistance, without being bound by the framework of existing concepts described above. Then, the present inventors have found that the air density $\rho$ of the mainstream is reduced by heating the air in the mainstream, and as a result, the air resistance F can be reduced, focusing on that the pressure resistance occupying the major part of the air resistance F is proportional to the air density $\rho$ of the mainstream.

Since the air in the mainstream is present at a place away from the surface of the automobile 1, the air cannot be heated directly. However, by providing the reflection control layer 21 that reflects light in a predetermined wavelength region on the surface of the automobile 1, light irradiated from the sun, clouds, and moisture in the air, and light such as infrared rays radiated from the road surface are reflected by the reflection control layer 21, and the air in the mainstream can be heated by the reflected light.

From the reasons described above, since the mobile body has the reflection control layer, air resistance of the mobile body can be reduced.

<Temperature increase of mainstream by reflected light>

In order to verify that the air in the mainstream can be actually heated by the mechanism described above, the present inventors arranged an automobile fender in a wind tunnel and irradiated simulated sunlight to the fender portion in an air flowing state, in order to simulate the travel environment of the automobile. Then, the present inventors measured how much the temperature increased before and after the air flowing in the portion irradiated with the simulated sunlight passed the portion. Three types of fenders having the same shape but with a different paint from each other were prepared to perform verification. A paint layer formed on the fender corresponds to the reflection control layer 21 in the present embodiment.

Fig. 4 is a graph illustrating a verification result of the temperature increase of the mainstream by the reflected light. Fig. 4 illustrates evaluation results according to first to third experimental examples in which the verification was performed, where reference sign 81 corresponds to the first experimental example in which standard black paint referred to as "super black" is applied, reference sign 82 corresponds to the second experimental example in which standard white paint referred to as "white pearl" is applied, and reference sign 83 corresponds to the third experimental example in which silver paint by "silver plating" is applied. The average reflectance in a wavelength region from an ultraviolet wavelength to a far infrared wavelength increases in the order of the first to third experimental examples.

Here, the "average reflectance" is a mean value of a spectral reflectance (a reflectance with respect to monochromatic light) in a specified wavelength region. That is, in the specified wavelength region, the spectral reflectance being a wavelength function is measured, and a value acquired by averaging the spectral reflectance measured over the specified wavelength region is defined as "average reflectance".

In the verification, a thermocouple 31a is arranged on an upstream side of a portion irradiated with the simulated sunlight and a thermocouple 31b is arranged on a downstream side of the portion irradiated with the simulated sunlight, along the flow of the air at positions away from the fender surface of the automobile by a distance d in a vertical direction to the surface. Here, the distance d is set to 18 millimeters so that the thermocouples are arranged in the mainstream outside the boundary layer on the surface of the fender. The thermocouple 31a and the thermocouple 31b are arranged with a gap of 200 millimeters along the flow of the air, and the simulated sunlight is irradiated to a section sandwiched between the thermocouple 31a and the thermocouple 31b. The velocity of the air in the mainstream with respect to the fender is set to a wind velocity of 40 kilometers per hour.

For the sake of accuracy of verification, enough attention is paid so that the simulated sunlight is not directly irradiated with respect to the thermocouple 31a and the thermocouple 31b. The air temperature measured by the thermocouple 31a is the temperature of the air immediately before being warmed by the simulated sunlight reflected by the fender, and the air temperature measured by the thermocouple 31b is the temperature of the air immediately after being warmed by the simulated sunlight reflected by the fender.

As illustrated in Fig. 4, it has been found that the temperature measured by the thermocouple 31b is higher than the temperature measured by the thermocouple 31a. Further, it has been found that a temperature increase $\Delta T$ increases in the order of the first to third experimental examples. That is, it has been found that the temperature increase $\Delta T$ becomes larger, as the average reflectance of the paint on the surface of the automobile becomes higher.

When it is assumed that the whole length of an actual automobile is 4400 millimeters, the temperature increase over the whole length of the automobile becomes 22 times the temperature increase $\Delta T$ illustrated in Fig. 4. Therefore, in the actual automobile, temperature increases of about 2K, about 4K, and about 6.6K occur in the order of the first to third experimental examples.

As described above, it has been found that the air in the mainstream can be actually heated by reflecting light by the reflection control layer provided on the surface of the automobile.

When this is applied to an equation of state for an ideal gas, if it is assumed that the air of 300K becomes 306.6K by a temperature increase of 6.6K, a density reduction of about 2% is caused. This corresponds to a reduction of about 2% in the air resistance F.

<Configuration of reflection control layer>

In the present embodiment, the reflection control layer 21 of a different type is provided on the surface of the automobile 1 in accordance with the type of the surface of the automobile (an automobile front surface 110, an automobile top surface 112, and an automobile side surface 114). This aspect is described next.

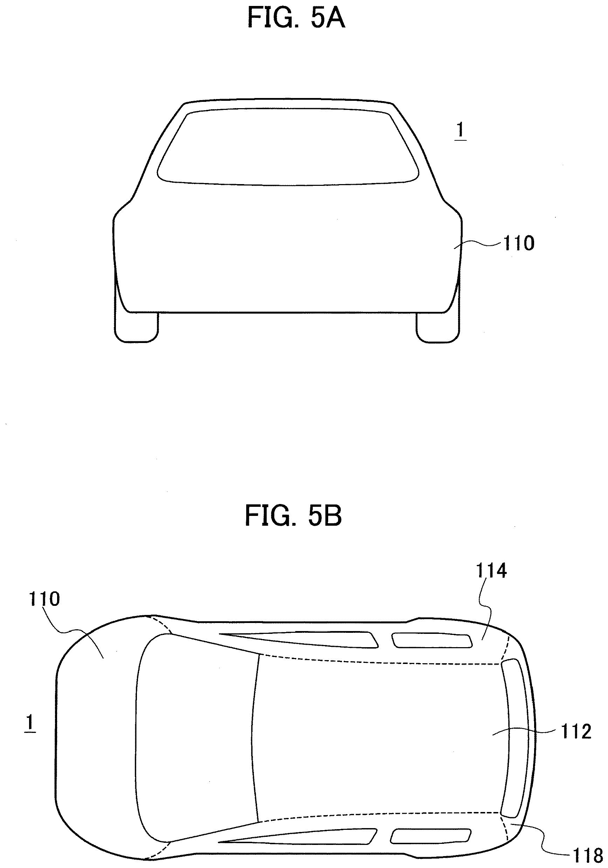

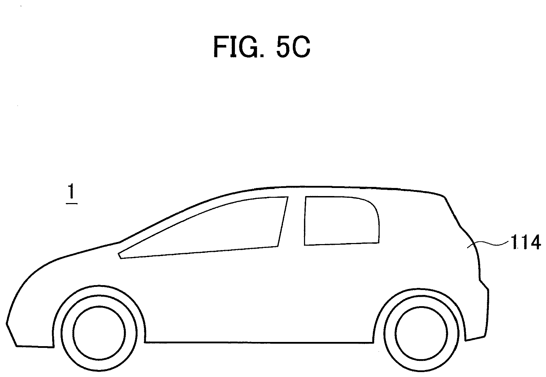

Fig. 5A is a front view when the automobile according to the present embodiment is viewed from the front with respect to a traveling direction. Fig. 5B is a top view when the automobile according to the present embodiment is viewed from above with respect to the traveling direction. Fig. 5C is a side view when the automobile according to the present embodiment is viewed from the side with respect to the traveling direction.

Since the surface of the automobile 1 has different angles formed with respect to the traveling wind or the traveling direction depending on the place where the surface is formed, the type of power received from the traveling wind is different depending on the place.

Since a surface forming an angle closer to 90 degrees with respect to the traveling wind, of the surface of the automobile 1, has a larger capability of blocking the movement of the traveling wind, and thus it can be said that the surface is "easy to receive the traveling wind". On such a surface, it can be regarded that the viscous resistance is negligibly small as compared with the pressure resistance.

On the other hand, since a surface forming an angle closer to 0 degree with respect to the traveling wind, of the surface of the automobile 1, has a smaller capability of blocking the movement of the traveling wind, and thus it can be said that the surface is "hard to receive the traveling wind". On such a surface, the viscous resistance cannot be ignored as compared with the pressure resistance.

As illustrated in Fig. 5A, of the surface of the automobile 1, surfaces of the automobile 1 that can be viewed from the front in the traveling direction such as a front glass, a front bumper, and an engine hood are easy to receive the traveling wind from the traveling direction of the automobile 1 during travel.

Therefore, of the surface of the automobile 1 (mobile body), a surface that receives the traveling wind from the traveling direction of the automobile 1 (mobile body) during travel is defined as "automobile front surface 110" (mobile body front surface). Alternatively, a surface that can be viewed from the front in the traveling direction of the automobile 1 may be defined as "automobile front surface 110" (mobile body front surface).

In the present embodiment, a reflection control layer 21A having an average reflectance of 4% or higher in the wavelength region from 0.75 micrometer to 100 micrometers is formed on the automobile front surface 110.

Further, as illustrated in Fig. 5B, a roof (top panel) of the surface of the automobile 1 is hard to receive the traveling wind from the traveling direction of the automobile 1 during travel.

Therefore, of the surface of the automobile 1 (mobile body), a surface that can be viewed from above the automobile 1 and is hard to receive the traveling wind is defined as "automobile top surface 112" (mobile body top surface). Alternatively, a surface that becomes substantially parallel (parallel or in a positional relation close to parallel) to the traveling direction of the automobile 1 (mobile body) at the time of travel can be defined as "automobile top surface 112" (mobile body top surface).

Since the automobile top surface 112 becomes substantially parallel to the traveling wind, the automobile top surface 112 is hard to receive the traveling wind from the traveling direction of the automobile 1 during travel.

In the present embodiment, a reflection control layer 21B having an average reflectance of 4% or higher in a wavelength region from 0.3 micrometer to 100 micrometers is formed on the automobile top surface 112.

Further, as illustrated in Fig. 5C, surfaces that can be viewed from the side of the traveling direction of the automobile 1 such as side doors, fenders, and tire wheels, of the surface of the automobile 1, are hard to receive the traveling wind from the traveling direction of the automobile 1 during travel, when the automobile 1 is traveling straight ahead at the time of traveling straight ahead).

On the other hand, the surfaces that can be viewed from the side of the traveling direction of the automobile 1 such as side doors, fenders, and tire wheels, of the surface of the automobile 1, are easy to receive the traveling wind from the traveling direction of the automobile 1 during travel, when the automobile 1 is traveling on a curved road (at the time of traveling on a curved road).

Therefore, of the surface of the automobile 1 (mobile body), a surface that receives the traveling wind from the traveling direction of the automobile 1 (mobile body) at the time of traveling on a curved road is defined as "automobile side surface 114" (mobile body side surface). Alternatively, a surface that can be viewed from the side of the traveling direction of the automobile 1 may be defined as "automobile side surface 114" (mobile body side surface).

Since the automobile side surface 114 becomes substantially parallel to the traveling wind at the time of traveling straight ahead, the automobile side surface 114 is hard to receive the traveling wind from the traveling direction. On the other hand, at the time of traveling on a curved road, the automobile side surface 114 is easy to receive the traveling wind from the traveling direction in accordance with an angle formed between the traveling wind and the automobile side surface 114.

According to the present embodiment, a reflection control layer 21C having an average reflectance of 4% or higher in the wavelength region from 0.75 micrometer to 100 micrometers may be formed on the automobile side surface 114.

In the above descriptions, a surface that can be viewed from behind the automobile 1 with respect to the traveling direction of the automobile 1 is defined as "automobile rear surface 118" (mobile body rear surface), and a surface that can be viewed from above the automobile 1 and a surface other than the automobile front surface 110, the automobile side surface 114, and the automobile rear surface 118, of the surface of the automobile 1 (mobile body), may be defined as "automobile top surface 112".

According to the present embodiment, a reflection control layer 21D having an average reflectance of 4% or higher in the wavelength region from 0.75 micrometer to 100 micrometers may be formed on the automobile rear surface 118.

That is, according to the present embodiment, the reflection control layer 21B having an average reflectance of 4% or higher in the wavelength region from 0.3 micrometer to 100 micrometers is formed on the automobile top surface 112, and reflection control layers 21A, 21C, and 21D having an average reflectance of 4% or higher in the wavelength region from 0.75 micrometer to 100 micrometers are formed in a portion excluding the automobile top surface 112, of the surface of the automobile 1.

According to the present embodiment, the average reflectance of the reflection control layers 21A and 21B has a different value from each other. The average reflectance of the reflection control layers 21C and 21D does not necessarily have the same value and may have different value from each other.

Since the automobile top surface 112 is substantially parallel to the traveling wind, the automobile top surface 112 is substantially parallel to the traveling direction of the automobile 1. Therefore, the reflection control layer 21B formed on the automobile top surface 112 is likely to reflect the light incident from above the automobile 1 to an upper side of the automobile 1.

Meanwhile, since the automobile front surface 110, the automobile side surface 114, and the automobile rear surface 118 are not substantially parallel to the traveling wind, these surfaces are not substantially parallel to the traveling direction of the automobile 1. Therefore, unlike the reflection control layer 21B, the reflection control layers 21A, 21C, and 21D are likely to reflect the light incident from above the automobile 1 to the front, side, and rear. That is, it can be said that the reflection control layers 21A, 21C, and 21D are likely to reflect the light incident from above the automobile 1 toward pedestrians being at the front, the side, and the rear positions of the automobile 1.

The surface of the automobile 1 reflects direct light from above the automobile 1, and indirect light caused by direct light from above that is reflected by an object around the automobile 1. The automobile front surface 110, the automobile top surface 112, and the automobile rear surface 118 reflect direct light at a higher rate than that of indirect light. On the other hand, the automobile side surface 114 reflects indirect light at a higher rate than that of direct light. Therefore, the automobile front surface 110, the automobile top surface 112, and the automobile rear surface 118 are bright and can be easily viewed by pedestrians, compared to the automobile side surface 114.

<Effects of providing reflection control layer>

According to the aspect described above, light incident to the surface of the automobile 1 is reflected by the reflection control layer 21. Therefore, the mainstream 2 present around the automobile 1 during travel is heated by the light reflected by the surface of the automobile 1. Since the density of the mainstream 2 decreases due to heating, an air resistance F of the automobile 1 can be reduced.

Particularly, since the reflection control layer 21A is formed on the automobile front surface 110, the pressure resistance caused by the traveling wind received from the front in the traveling direction of the automobile 1 at the time of travel can be reduced.

Further, light reflected by the reflection control layer 21 includes light present in the wavelength region of sunlight and the wavelength region of infrared radiation, the air resistance F of the automobile 1 can be reduced by the reflected light.

Further, the average reflectances of the reflection control layers 21A, 21C, and 21D that are likely to reflect light incident from above the automobile 1 toward pedestrians being at the front, the side, and the rear positions of the automobile 1 are different from the average reflectance of the reflection control layer 21B formed on the automobile top surface 112. Therefore, it can be prevented that pedestrians are dazzled by reflected light by the reflection control layer 21.

More specifically, the reflection control layers 21A, 21C, and 21D have an average reflectance of 4% or higher in the wavelength region from 0.75 micrometer to 100 micrometers, and the average reflectance in the visible light region is suppressed to be low. Therefore, since light reflected by the reflection control layers 21A, 21C, and 21D includes light in the infrared radiation and in the oxygen absorbing region, the air resistance F of the automobile 1 can be reduced by the reflected light, while preventing that pedestrians are dazzled by the reflected light by the reflection control layers 21A, 21C, and 21D.

In order to prevent as much as possible that pedestrians are dazzled by the reflected light from the surface of the automobile 1, it can be considered to reduce the average reflectance in the visible light region also for the reflection control layer 21B formed on the automobile top surface 112. However, such a configuration is not adopted in the present embodiment.

First, the reason is that the reflection control layer 21B is likely to reflect the light incident from above the automobile 1 to the upper side of the automobile 1, and thus the possibility that pedestrians are dazzled by the reflected light from the automobile top surface 112 is small.

Secondly, in the automobile top surface 112, the viscous friction received from the boundary layer 41 has a non-negligible magnitude as compared with the pressure resistance and the viscous friction of air has a property such that it increases with the temperature increase of the automobile top surface 112. Therefore, light in the wavelength region of the visible light range and the near-ultraviolet radiation having higher energy than the infrared radiation should be reflected to reduce the resistance due to the viscous friction by suppressing the temperature increase of the automobile top surface 112.

That is, the air resistance F of the automobile 1 can be reduced by the reflected light, while suppressing the viscous resistance generated on the automobile top surface 112, by setting the average reflectance in the wavelength region from 0.3 micrometer to 100 micrometers including the wavelength region of the visible light range and the near-ultraviolet radiation to be equal to or higher than 4% for the reflection control layer 21B formed on the automobile top surface 112.

Further, according to the aspect described above, the reflection control layer 21C is formed on the automobile side surface 114. Therefore, at the time of traveling on a curved road, the pressure resistance resulting from the traveling wind received from the side surface of the automobile 1 can be reduced.

Further, according to the aspect described above, since the rate of reflection of the direct light and the indirect light is different depending on each portion of the automobile front surface 110, the automobile top surface 112, the automobile side surface 114, and the automobile rear surface 118, the design property of the automobile 1 can be improved, while reducing the possibility of dazzling pedestrians by setting the average reflectance of the reflection control layers 21A, 21B, 21C, and 21D to values different from each other.

Particularly, by setting the color of the automobile top surface 112 to a color different from that of the automobile front surface 110, the automobile side surface 114, and the automobile rear surface 118, or setting the average reflectance of the reflection control layer 21B to a value different from values of the reflection control layers 21A, 21C, and 21D, the design property of the automobile 1 can be improved via brightness and a chromatic value of respective portions of the automobile 1, while reducing the possibility of dazzling pedestrians.

Further, a difference between the brightness of the automobile front surface 110 and the automobile rear surface 118 and the brightness of the automobile side surface 114 can be increased via the average reflectance of the reflection control layers 21A, 21B, 21C, and 21D. Similarly, a difference between the chromatic values of the automobile front surface 110 and the automobile rear surface 118 and the chromatic value of the automobile side surface 114 can be increased. The difference in brightness and the difference in the chromatic values can also be increased simultaneously. As a result, a difference between color of the automobile front surface 110 and the automobile rear surface 118, and color of the automobile side surface 114 can be increased, thereby enabling to improve the design property of the automobile 1, while reducing the possibility of dazzling pedestrians.

Further, a difference between the brightness of the automobile front surface 110 and the automobile rear surface 118 and the brightness of the automobile side surface 114 can be decreased via the average reflectance of the reflection control layers 21A, 21B, 21C, and 21D. Similarly, a difference between the chromatic values of the automobile front surface 110 and the automobile rear surface 118 and the chromatic value of the automobile side surface 114 can be decreased. The difference in brightness and the difference in the chromatic values can also be decreased simultaneously. As a result, a difference between color of the automobile front surface 110 and the automobile rear surface 118, and color of the automobile side surface 114 can be decreased, thereby enabling to improve the design property of the automobile 1, while reducing the possibility of dazzling pedestrians.

In the embodiment described above, a case where the mobile body is an automobile has been described. However, the present invention can be applied to a mobile body that moves in the air, other than an automobile. As an example of the mobile body, a two-wheeled vehicle, railway train, aircraft, rocket, and the like can be mentioned other than an automobile.

Although the contents of the present invention have been described above with reference to the embodiments, the present invention is not limited to these descriptions, and it will be apparent to those skilled in the art that various modifications and improvements can be made within the scope of the claims.

It is needless to mention that the present invention also includes various embodiments that are not described herein. Therefore, the technical scope of the present invention is to be defined only by the scope of claims.

REFERENCE SIGNS LIST

| | |
|---|---|
| 1 | automobile (mobile body) |
| 2 | mainstream |
| 20 | vehicle-body paint layer |
| 21, 21A, 21B, 21C, 21D | reflection control layer |
| 41 | boundary layer |
| 42 | boundary |
| 43 | outside region |
| 110 | automobile front surface (mobile body front surface) |
| 112 | automobile top surface mobile body top surface) |
| 114 | automobile side surface (mobile body side surface) |

**Claims**

1. A mobile body (1) having a reflection control layer that reflects light in a wavelength region of sunlight or a wavelength region of infrared radiation formed on a surface of the mobile body (1), wherein

   when a surface that receives traveling wind from a traveling direction of the mobile body (1), of the surface of the mobile body (1), is designated as a mobile body front surface (110) and a surface substantially parallel to the traveling direction is designated as a mobile body top surface (112), **characterized in that** an average reflectance in a wavelength from 0.75 micrometer to 100 micrometers of the reflection control layer (21A) on the mobile body front surface (110) is different from an average reflectance in a wavelength from 0.3 micrometer to 100 micrometers of the reflection control layer (21B) on the mobile body top surface (112), wherein an average reflectance of the reflection control layer (21A) on the mobile body front surface (110) in a wavelength from 0.75 micrometer to 100 micrometers is equal to or higher than 4%.

2. The mobile body (1) according to claim 1, wherein an average reflectance of the reflection control layer (21B) on the mobile body top surface (112) in a wavelength from 0.3 micrometer to 100 micrometers is equal to or higher than 4%.

3. The mobile body (1) according to claim 1 or 2, wherein

   when a surface that receives traveling wind from the traveling direction of the mobile body (1) at the time of traveling on a curved road, of the surface of the mobile body (1), is designated as a mobile body side surface (114), an average reflectance of the reflection control layer (21C) on the mobile body side surface (114) is different from an average reflectance of the reflection control layer (21B) on the mobile body top surface (112).

**Patentansprüche**

1. Mobilkörper (1) mit einer Reflexionssteuerschicht, die Licht in einem Wellenlängenbereich von Sonnenlicht oder einem Wellenlängenbereich von Infrarotstrahlung reflektiert, die an einer Oberfläche des Mobilkörpers (1) geformt ist, wobei

   wenn eine Oberfläche, die Fahrtwind aus einer Fahrtrichtung des Mobilkörpers (1) aufnimmt, der Oberfläche des Mobilkörpers (1) als Mobilkörper-Vorderoberfläche (110) bezeichnet ist und eine Oberfläche, die im Wesentlichen parallel zu der Fahrtrichtung ist, als Mobilkörper-Ober-Oberfläche (112) bezeichnet ist, **dadurch gekennzeichnet, dass**
ein durchschnittlicher Reflexionsgrad in einer Wellenlänge von 0,75 Mikrometer bis 100 Mikrometer der Reflexionssteuerschicht (21A) an der Mobilkörper-Vorderoberfläche (110) sich von einem durchschnittlichen Reflexionsgrad in einer Wellenlänge von 0,3 Mikrometer bis 100 Mikrometer der Reflexionssteuerschicht (21B) an der Mobilkörper-Ober-Oberfläche (112) unterscheidet, wobei
ein durchschnittlicher Reflexionsgrad der Reflexionssteuerschicht (21A) an der Mobilkörper-Vorderoberfläche (110) bei einer Wellenlänge von 0,75 Mikrometern bis 100 Mikrometern gleich oder höher als 4% ist.

2. Mobilkörper (1) nach Anspruch 1, wobei
ein durchschnittlicher Reflexionsgrad der Reflexionssteuerschicht (21B) an der Mobilkörper-Ober-Oberfläche (112) bei einer Wellenlänge von 0,3 Mikrometern bis 100 Mikrometern gleich oder höher als 4% ist.

3. Mobilkörper (1) nach Anspruch 1 oder 2, wobei

wenn eine Oberfläche, die Fahrtwind aus der Fahrtrichtung des Mobilkörpers (1) beim Fahren auf einer gekrümmten Straße aufnimmt, der Oberfläche des Mobilkörpers (1) als eine Seitenoberfläche (114) des Mobilkörpers bezeichnet ist,
ein durchschnittlicher Reflexionsgrad der Reflexionssteuerschicht (21C) an der Seitenoberfläche des Mobilkörpers (114) sich von einem durchschnittlichen Reflexionsgrad der Reflexionssteuerschicht (21B) an der Mobilkörper-Ober-Oberfläche (112) unterscheidet.

## Revendications

1. Carrosserie mobile (1) ayant une couche de commande de réflexion qui réfléchit la lumière dans une région de longueur d'onde de la lumière du soleil ou une région de longueur d'onde de rayonnement infrarouge formée sur une surface de la carrosserie mobile (1), dans laquelle

lorsqu'une surface qui reçoit le vent de déplacement d'une direction de déplacement de la carrosserie mobile (1), de la surface de la carrosserie mobile (1), est désignée comme une surface avant de carrosserie mobile (110) et une surface sensiblement parallèle à la direction de déplacement est désignée comme une surface supérieure de carrosserie mobile (112), **caractérisée en ce que**
un facteur de réflexion moyen dans une longueur d'onde allant de 0,75 micromètre à 100 micromètres de la couche de commande de réflexion (21A) sur la surface avant de carrosserie mobile (110) est différent d'un facteur de réflexion moyen dans une longueur d'onde allant de 0,3 micromètre à 100 micromètres de la couche de commande de réflexion (21B) sur la surface supérieure de carrosserie mobile (112), dans laquelle
un facteur de réflexion moyen de la couche de commande de réflexion (21A) sur la surface avant de carrosserie mobile (110) dans une longueur d'onde allant de 0,75 micromètre à 100 micromètres est supérieur ou égal à 4%.

2. Carrosserie mobile (1) selon la revendication 1, dans laquelle
un facteur de réflexion moyen de la couche de commande de réflexion (21B) sur la surface supérieure de carrosserie mobile (112) dans une longueur d'onde allant de 0,3 micromètre à 100 micromètres est supérieur ou égal à 4%.

3. Carrosserie mobile (1) selon la revendication 1 ou 2, dans laquelle

lorsqu'une surface qui reçoit le vent de déplacement de la direction de déplacement de la carrosserie mobile (1) au moment du déplacement sur une route incurvée, de la surface de la carrosserie mobile (1), est désignée comme une surface de côté de carrosserie mobile (114),
un facteur de réflexion moyen de la couche de commande de réflexion (21C) sur la surface de côté de carrosserie mobile (114) est différent d'un facteur de réflexion moyen de la couche de commande de réflexion (21B) sur la surface supérieure de carrosserie mobile (112).

# FIG. 1

# FIG. 2

# FIG. 3

21(21A,21B,
21C,21D)

20

41

1

# FIG. 4

DISTANCE IN FRONT AND REAR DIRECTION
OF VEHICLE BODY [mm]

# FIG. 5A

# FIG. 5B

## FIG. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 3230838 A
- JP S5826622 A
- US 9588268 B2